# EUROPÄISCHE PATENTANMELDUNG

(11) **EP 2 017 938 A1**
(43) Veröffentlichungstag der Anmeldung: **21.01.2009**
(21) Anmeldenummer: 07450127.1
(22) Anmeldetag: 18.07.2007
(51) Int. Cl.: H02J 7/00

(54) **Akkumulator**

(71) Anmelder: Magna Steyr Fahrzeugtechnik AG & Co. KG, 8041 Graz (AT)
(72) Erfinder: Krammer, Gert, 8042 Graz (AT)
(74) Vertreter: Weiser, Andreas

(57) **Zusammenfassung**

Akkumulator (1), mit zumindest zwei in einem Stapel (2) übereinanderliegenden, seriellgeschalteten Zellen (3', 3") mit flächigen Elektroden (4, 5), wobei die Enden des Stapels (2) die Pole (9, 10) des Akkumulators (1) bilden und die Elektroden (4, 5) seitlich aus dem Stapel (2) austretende Anschlußleitungen (11, 12) aufweisen, wobei zumindest die einen Anschlußleitungen (11, 12) aller Zellen (3', 3") über einen sich etwa in Stapellängsrichtung erstreckenden gemeinsamen Kern (13) induktiv gekoppelt sind, und wobei die Anschlußleitungen (11, 12) einer ersten Gruppe von Zellen (3') induktiv entgegengesetzt zu den Anschlußleitungen (11, 12) einer zweiten Gruppe von Zellen (3") gekoppelt sind.

## Beschreibung

Die vorliegende Erfindung betrifft einen Akkumulator, mit zumindest zwei in einem Stapel übereinanderliegenden, seriellgeschalteten Zellen mit flächigen Elektroden, wobei die Enden des Stapels die Pole des Akkumulators bilden und die Elektroden seitlich aus dem Stapel austretende Anschlußleitungen aufweisen.

Derartige Akkumulatoren werden in jüngster Zeit auch in elektrischen Antriebssystemen von Kraftfahrzeugen verwendet, um hohe Akkumulatorpolspannungen von über 100 V durch Stapelung und Serienschaltung einer entsprechend hohen Anzahl flacher Zellen zu bilden.

Die Serienschaltung der Zellen hat jedoch den Nachteil, daß alle Zellen mit demselben Ladestrom aufgeladen werden und daher schon geringe qualitative Unterschiede der einzelnen Zellen zu unterschiedlichen Ladezuständen führt. Zum Ladungsausgleich zwischen den einzelnen Zellen wurden daher bereits zahlreiche Schaltungen vorgeschlagen, die auf die einzelnen Elektroden der Zellen zugreifen und entweder auf zell-individueller Ladungsvernichtung über ein Widerstandsnetzwerk, auf Zellumladung über Kondensatoren oder auf induktiver Energieübertragung zwischen den Zellen beruhen. Letztere Variante ist als induktiver Ladungsausgleich ("inductive balancing") bekannt und beispielsweise in den Schriften DE 195 33 543 A1 und DE 44 22 409 A1 beschrieben.

Beim induktiven Ladungsausgleich werden die einzelnen Zellen über Schalter abwechselnd mit Spulen verbunden, die über einen gemeinsamen Kern induktiv gekoppelt sind. Die von einer Zelle mit höherem Ladungszustand abgegebene Energie wird in den Aufbau eines Magnetfelds umgesetzt, dessen Abbau beim Umschalten der Schalter in Ladungsenergie für eine Zelle niedrigeren Ladungszustands zurückgewandelt wird, wodurch sich bei fortgesetztem Umschalten ein Ladungsausgleich zwischen allen Zellen ergibt. Der induktive Ladungsausgleich hat den großen Vorteil, daß automatisch eine galvanische Trennung der Zellen gegeben ist. Ein Nachteil ist jedoch der hohe Verdrahtungsaufwand für die Verbindung der einzelnen Zellen mit den zur Energieumladung verwendeten Spulen. Bei Akkumulatoren, die aus einer großen Zahl von Zellen zusammengesetzt sind, z.B. einigen 10 oder 100 Zellen, ist der hohe Verdrahtungsaufwand derzeit prohibitiv für einen praktischen Einsatz des induktiven Ladungsausgleichs.

Die Erfindung setzt sich zum Ziel, die geschilderten Nachteile des Standes der Technik zu überwinden und einen Akkumulator aus gestapelten Zellen zu schaffen, der auf einfache und kostengünstige Weise einen Betrieb mit induktivem Ladungsausgleich ermöglicht.

Dieses Ziel wird mit einem Akkumulator der einleitend genannten Art erreicht, der sich gemäß der Erfindung dadurch auszeichnet, daß zumindest die einen Anschlußleitungen aller Zellen über einen sich etwa in Stapellängsrichtung erstreckenden gemeinsamen Kern induktiv gekoppelt sind, wobei die Anschlußleitungen einer ersten Gruppe von Zellen induktiv entgegengesetzt zu den Anschlußleitungen einer zweiten Gruppe von Zellen gekoppelt sind.

Auf diese Weise wird erstmals eine kompakte Einheit aus Akkumulatorstapel und Kern geschaffen, in welcher sich der Kern über die gesamte Länge des Stapels, bevorzugt normal, zu den flächigen Elektroden erstreckt. Dadurch können die von den Elektroden ausgehenden Anschlußleitungen direkt und ohne aufwändige Zwischenverdrahtungen am Kern vorbei, um diesen herum, durch diesen hindurch oder sonst in der gewünschten Weise gewunden oder geführt werden, um ihre induktive Kopplung herbeizuführen. Nach dem Passieren des gemeinsamen Kerns können die Anschlußleitungen dann in herkömmlicher Art und Weise mit Schaltern zum entsprechenden Umschalten der so geschaffenen Induktivitäten beschaltet werden.

Besonders vorteilhaft ist es, wenn jede der genannten Anschlußleitungen sich in der Ebene ihrer flächigen Elektrode am Kern vorbeiwindet. Dadurch eignet sich die erfindungsgemäße Anordnung besonders für einen Schichtaufbau mit einer Vielzahl sehr dünner, z.B. aus Folien gefertigter Elektroden, deren Anschlußleitungen direkt und kreuzungsfrei geführt werden können.

Bevorzugt wird vorgesehen, daß jede Elektrode mit ihrer Anschlußleitung einstückig gefertigt ist, was hohe Kostenvorteile für die Massenfertigung ergibt.

Der Aufbau des erfindungsgemäßen Akkumulators kann weiter vereinheitlicht und vereinfacht werden, wenn die genannten einen Anschlußleitungen in der ersten Gruppe von den positiven und in der zweiten Gruppe von den negativen Elektroden der Zellen ausgehen, oder umgekehrt.

Die Kopplung kann noch weiter erhöht werden, wenn gemäß einem weiteren bevorzugten Merkmal der Erfindung auch die jeweils anderen Anschlußleitungen in entsprechendem Kopplungssinne über den Kern geführt sind, sodaß beide Anschlußleitungen einer Zelle zum Aufbau der Induktivität beitragen.

Eine weitere vorteilhafte Ausführungsform der Erfindung zeichnet sich dadurch aus, daß der Kern ein U- oder O-Kern ist, dessen Längsschenkel den Stapel durchsetzen, wobei die jeweils einen Anschlußleitungen der Zellen, durch Schlitze von ihrer Elektrode abgegrenzt, zwischen den Längsschenkeln hindurchtreten, wogegen die jeweils anderen Elektroden der Zellen einen Trennschlitz zwischen den Längsschenkeln aufweisen. Diese Ausführung erzielt ein Optimum an Kompaktheit und Effizienz: Der Kern ist direkt in den Stapel integriert, und die Anschlußleitungen sind direkt aus den Elektroden herausgearbeitet, was den Materialbedarf minimiert. Auf diese Weise werden einfach durch Erzeugen von Schlitzen in den Elektroden die Anschlußleitungen zur Stromführung gleich im gewünschten Sinne normal zur Kernerstreckung erzeugt, d.h. die Anschlußleitungen wirken als Halb- bzw. Teilwindungen um den Kern und sind über diesen induktiv gekoppelt, ohne daß gesonderte Verdrahtungen erforderlich wären.

In einer alternativen bevorzugten Ausführungsform kann der Kern zumindest zwei über mindestens einen Querschenkel verbundene Längsschenkel aufweisen, die den Stapel durchsetzen, wobei die genannten einen Anschlußleitungen der Zellen, durch Schlitze von ihrer Elektrode abgegrenzt, mäanderförmig zwischen den Längsschenkeln hindurchtreten. Beispielsweise könnte der Kern in der Form eines "E" drei Längsschenkel und einen Querschenkel aufweisen.

Dabei kann bevorzugt vorgesehen werden, daß die jeweils anderen Anschlußleitungen der Zellen, durch Schlitze von ihrer Elektrode abgegrenzt, entgegengesetzt mäanderförmig zwischen den Längsschenkeln hindurchtreten; alternativ können die jeweils anderen Elektroden der Zellen einen Trennschlitz zwischen den Längsschenkeln aufweisen. In beiden Fällen ergibt sich auf einfache Art und Weise die genannte entgegengesetzte Kopplung der beiden Gruppen von Zellen, wobei im ersten Fall eine noch höhere Kopplung erzielt wird.

Bevorzugt wechseln die Zellen der ersten und der zweiten Gruppe einander ab, was den Aufbau weiter vereinfacht und durch die Unterteilung der Zellen in zwei gleich große Gruppen den Ladungsausgleich optimiert.

Besonders vorteilhaft ist es, wenn die aneinander angrenzenden Elektroden zweier benachbarter Zellen zu einer gemeinsamen, an sich bekannten sog. "bipolaren" Elektrode vereinigt sind, wodurch weiter Material eingespart werden kann.

Aus demselben Grunde ist es besonders günstig, wenn auch die Anschlußleitungen der aneinander angrenzenden Elektroden zweier benachbarter Zellen zu einer gemeinsamen bipolaren Anschlußleitung vereinigt sind.

Eine mögliche Art der Beschaltung des erfindungsgemäßen Akkumulators besteht darin, daß die Anschlußleitungen jeder Zelle über einen gesteuerten Schalter verbunden sind, wobei zumindest ein Schalter der ersten und zumindest ein Schalter der zweiten Gruppe von Zellen abwechselnd angesteuert sind.

Eine weitere bevorzugte Ausführungsform der Erfindung zeichnet sich dadurch aus, daß der Kern mit einer Hilfswicklung zur Auskopplung von Sekundärleistung und/oder zum Laden des Akkumulators versehen ist. Dadurch kann einerseits selbst bei einer Unterbrechung des Laststromkreises des Akkumulators Energie aus dem Akkumulator entnommen werden, was auch die Möglichkeit einer Spannungstransformation in der Art eines DC/DC-Wandlers eröffnet, wie weiter unten noch erörtert wird. Anderseits ist über diese Hilfswicklung sogar ein Laden des Akkumulators unter gleichzeitigem "inductive balancing" möglich.

Die Erfindung eignet sich für jede Art von Akkumulator mit flächigen Elektroden. Bevorzugt ist der Akkumulator jedoch ein Lithium-Ionen- oder Lithium-Polymer-Akkumulator, welche Arten sich durch hohe Leistungsdichte auszeichnen und für einen induktiven Ladungsausgleich gut geeignet sind.

Die Erfindung wird nachstehend anhand von in den beigeschlossenen Zeichnungen dargestellten Ausführungsbeispielen näher erläutert. In den Zeichnungen zeigen
Fig. 1 eine erste Ausführungsform des Akkumulators der Erfindung in einer schematischen Perspektivansicht;
Fig. 2 ein Blockschaltbild des Akkumulators von Fig. 1;
Fig. 3 die ersten vier Elektroden des Akkumulators von Fig. 1 in der Draufsicht;
die Fig. 4 bis 7 weitere Ausführungsformen des erfindungsgemäßen Akkumulators in einer Gesamtdraufsicht (Fig. 4, 6) bzw. in einzelnen Draufsichten auf die ersten vier Elektroden (Fig. 3a-d, 5a-d) ;
Fig. 8 den Akkumulator von Fig. 7 in einer schematischen Perspektivansicht; und
Fig. 9 eine weitere Ausführungsform des erfindungsgemäßen Akkumulators in einer Gesamtdraufsicht auf die ersten beiden Elektroden.

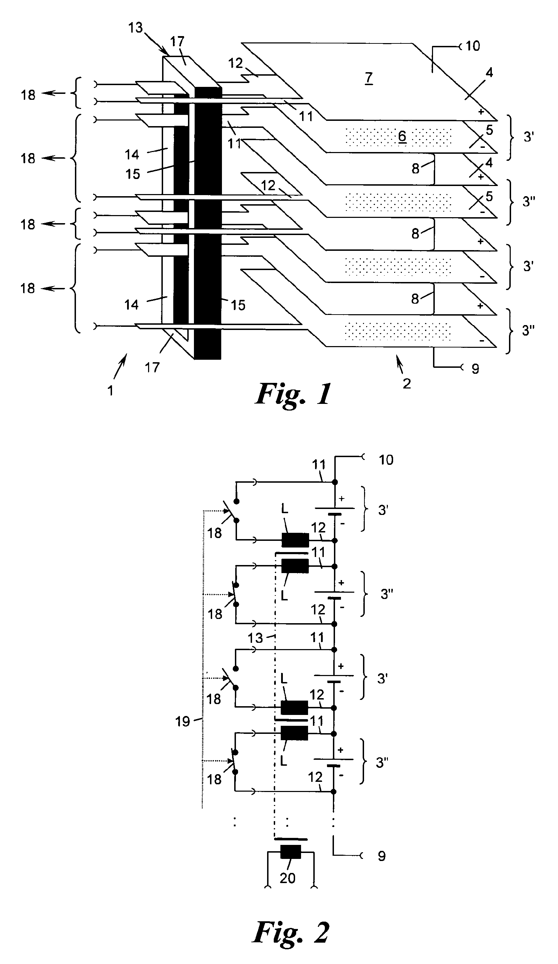

Fig. 1 zeigt einen Akkumulator 1, der einen Stapel 2 von (hier) vier übereinanderliegenden Zellen 3', 3" aufweist. Jede Zelle 3', 3" setzt sich aus einer flächigen positiven Elektrode 4 und einer flächigen negativen Elektrode 5 und einem dazwischenliegenden chemischen Aufbau bzw. Elektrolyten 6 zusammen.

Die Zellen 3', 3" können von jeder in der Technik bekannten Art sein, beispielsweise Lithium-Ionen-Zellen, Lithium-Polymer-Zellen usw. Der genaue Innenaufbau der Zellen 3', 3" ist nicht Gegenstand der Erfindung und wird daher nicht näher erläutert; für die Zwecke der vorliegenden Erfindung ist ausreichend zu erwähnen, daß die Zellen 3', 3" flach sind, d.h. im Vergleich zu der Dicke ihrer Elektroden 4, 5 und ihres Elektrolyten 6 eine verhältnismäßig große Quer- und Längserstreckung in ihrer Ebene 7 besitzen. Beispielsweise werden bei modernen Lithium-Ionen-Zellen mit metallischen Schichten bedampfte dünne Trägerfolien für die Elektroden 4, 5 verwendet, so daß die flächigen Elektroden 4,5 bzw. Zellen 3', 3" folienartig und flexibel sind.

Der Begriff "flächige" Elektroden bzw. Zellen umfaßt demgemäß in der vorliegenden Offenbarung nicht nur ebene, sondern auch gekrümmte, gewellte oder sonstwie deformierte Elektroden und Zellen, solange sie in dem beschriebenen Sinne flach sind.

Die Umrisse der Elektroden 4, 5 und damit des gesamten Zellstapels 2 können beliebig gewählt und damit beispielsweise an einen zur Verfügung stehenden Einbauraum angepaßt werden. Bei dem bevorzugten Einsatz in Kraftfahrzeugen kann der Akkumulator 1 auf diese Weise z.B. vorhandene Fahrzeughohlräume paßgenau ausfüllen oder selbst als Fahrzeugteil ausgeformt sein, beispielsweise als Kofferraumboden, Sitzunterboden, Türinnenverkleidung usw.

Die Zellen 3', 3" im Stapel 2 sind in Serie geschaltet, wie durch die Verbindungen 8 schematisch angedeutet. In einer praktischen Ausführung werden die jeweils aneinandergrenzenden Elektroden 5, 4 zweier benachbarter Zellen 3', 3" in vollflächige Anlage gebracht, um sie zu kontaktieren, oder sind überhaupt zu einer gemeinsamen, sogenannten "bipolaren" Elektrode vereinigt.

Die Enden des Stapels 2 bilden die beiden Pole 9, 10 des Akkumulators 1. Die Elektroden 4, 5 der Zellen 3', 3" sind zusätzlich mit seitlich aus dem Stapel 2 austretenden Anschlußleitungen 11, 12 versehen. Bevorzugt verlaufen die Anschlußleitungen 11, 12 in der Ebene 7 der Elektroden 4, 5; insbesondere sind sie mit diesen einstückig ausgebildet, beispielsweise aus derselben (beschichteten) Folie geschnitten.

Die Anschlußleitungen 11, 12 der Zellen 3', 3" sind an einem Kern 13 aus magnetisch gut leitfähigem Material, z.B. Weicheisen oder Ferrit, vorbeigeführt, u.zw. so, daß sie im Betrieb, d.h. wenn Ströme über die Anschlußleitungen 11, 12 fließen, untereinander induktiv gekoppelt sind.

Der Kern 13 ist in der Ausführungsform von Fig. 1 ein Ring- bzw. O-Kern mit zwei Längsschenkeln 14, 15, die über zwei Querschenkel 17 zum Ring bzw. "0" geschlossen sind. (Falls gewünscht, könnte einer der Querschenkel 17 weggelassen werden, so daß sich ein U-Kern ergibt, was allerdings die Kopplung und Induktivität verringert). Unter dem Begriff "O-Kern" werden beliebige Arten von Kernen mit geschlossenem magnetischen Kreis verstanden, wie Ringkerne, ellipsenförmige O-Kerne, polygonzugförmige O-Kerne, U-Kerne mit Joch usw.

Die Längsschenkel 14, 15 des Kerns 13 erstrecken sich über die gesamte Längsrichtung des Stapels 2, u.zw. bevorzugt normal zu den Ebenen 7 der Elektroden 4, 5 (alternativ könnte der Kern 13 auch unter einem von 90° verschiedenen Winkel zu den Ebenen 7 über die Längserstreckung des Stapels 2 verlaufen, insbesondere wenn besondere Einbauanforderungen dies bedingen). Bei der Ausführungsform von Fig. 1 verläuft der Kern 1 unmittelbar neben dem Stapel 2 und kann z.B. eng mit diesem zusammengebaut werden.

Die Enden der Anschlußleitungen 11, 12 sind nach dem Passieren des Kernes 13 zur weiteren Beschaltung zugänglich. Fig. 2 zeigt eine bevorzugte Beschaltungsart.

Gemäß Fig. 2 werden die Enden der Anschlußleitungen 11, 12 jeder Zelle 3', 3" über einen gesteuerten Schalter 18 verbunden. Die durch das Passieren des Kerns 13 von den Anschlußleitungen 11, 12 jeweils gebildeten Induktivitäten L sind in Fig. 2 schaltbildlich gezeigt.

Wie aus den Fig. 1 und 2 ersichtlich, sind die Anschlußleitungen 11, 12 so durch den Kern 13 bzw. um diesen herum geführt, daß die induktive Kopplung zwischen den Anschlußleitungen einer ersten Gruppe 3' der Zellen genau entgegengesetzt ist zu jener einer zweiten Gruppe 3" der Zellen, wobei die Zellen der ersten Gruppe 3' und der zweiten Gruppe 3" einander abwechseln (letzteres ist nicht zwingend, vereinfacht jedoch den Schichtaufbau, wie später noch erörtert wird).

Werden nun die Schalter 18 der ersten Gruppe 3' und jene der zweiten Gruppe 3" von Zellen - durch einen Steuerungstakt 19 gesteuert - jeweils abwechselnd geschlossen, ergibt sich ein wechselnder Stromfluß durch die Induktivitäten L, welcher zum Aufbau eines wechselnden Magnetfelds im Kern 13 führt, das wiederum entsprechend wechselnde Spannungen in den Induktivitäten L und den angeschlossenen Zellen induziert. Im Ergebnis führt dies zu einem Energieausgleich von Zellen 3', 3" mit höherem Ladezustand zu Zellen 3', 3" mit niedrigerem Ladezustand, wie es als "inductive balancing" bekannt ist.

Falls gewünscht, kann über eine Hilfswicklung 20 auf dem Kern 13 aus dem wechselnden Magnetfeld im Kern 13 eine Hilfs- bzw. Sekundärleistung entnommen werden, welche beispielsweise zur Speisung weiterer elektrischer Komponenten - unabhängig vom Laststromkreis an den Polen 9, 10 des Akkumulators - herangezogen werden kann. Dies erübrigt beispielsweise einen gesonderten DC/DC-Wandler zur Speisung solcher Komponenten; ein im induktiven Ladungsausgleich betriebener Akkumulator 1 liefert damit als "Nebenprodukt" eine zusätzliche, über die Windungszahl der Hilfswicklung 20 wählbare Wechselspannung, die auch gleichgerichtet werden kann, um einen DC/DC-Wandler zu ersetzen.

Darüber hinaus kann die Hilfswicklung 20 sogar zum Laden des Akkumulators verwendet werden, wenn sie mit Wechselstrom gespeist wird, in welchem Fall das Laden unter gleichzeitigem "inductive balancing" erfolgt.

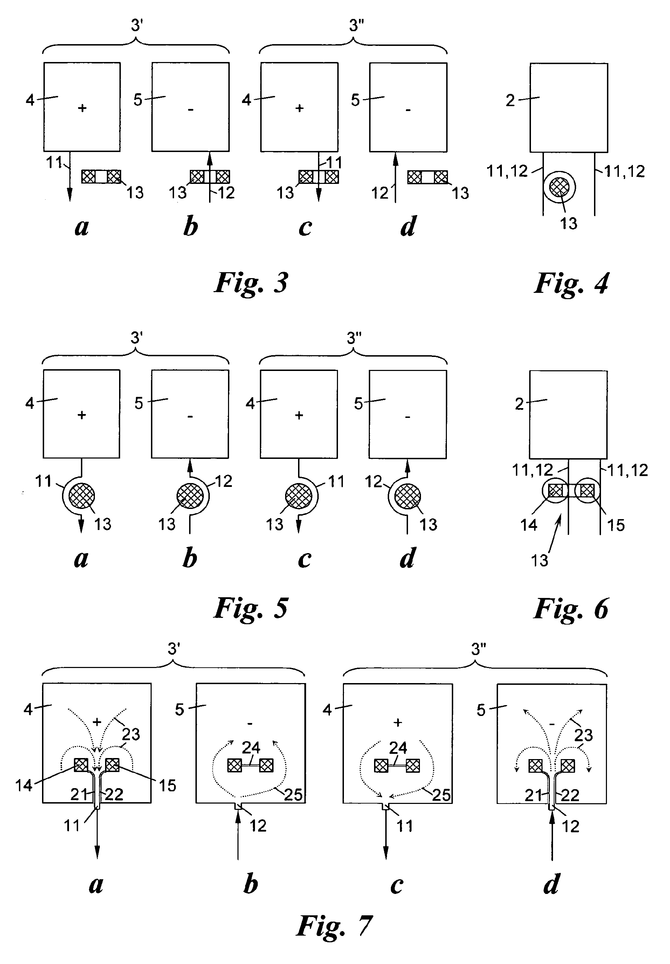

Im einfachsten Fall, wie er in Fig. 1 gezeigt ist, sind jeweils nur die einen Anschlußleitungen 11 bzw. 12 jeder Zelle 3', 3" - im entsprechenden Windungssinn, um die gewünschte Kopplungsrichtung wie in Fig. 2 gezeigt zu erreichen - am Kern 13 vorbei bzw. durch diesen hindurch geführt. Fig. 3 zeigt dies im Detail. Die Anschlußleitung 11 der positiven Elektrode 4 der Zelle 3' der ersten Gruppe geht entfernt am Kern 13 vorbei; die Anschlußleitung 12 der negativen Elektrode 5 der Zelle 3' der ersten Gruppe durchsetzt den Kern 13; die Anschlußleitung 11 der positiven Elektrode 4 der Zelle 3" der zweiten Gruppe durchsetzt ebenfalls den Kern 13; und die Anschlußleitung 12 der negativen Elektrode 5 der Zelle 3" der zweiten Gruppe geht wieder entfernt am Kern 13 vorbei. Aufgrund der umgekehrten Polaritäten der hier den Kern 13 durchsetzenden Anschlußleitungen ist somit die elektromagnetische Kopplung der Anschlußleitung 12 der Zelle 3' der ersten Gruppe induktiv, d.h. in Bezug auf die magnetische Flußrichtung im Kern 13, entgegengesetzt zu jener der Anschlußleitung 11 der Zelle 3" der zweiten Gruppe.

Fig. 4 zeigt eine erste alternative Ausführungsform mit einem stabförmigen Kern 13, um welchen die Anschlußleitungen 11 der Zellen 3' der ersten Gruppe und die Anschlußleitungen 12 der Zellen 3" der zweiten Gruppe jeweils in Form einer oder mehrerer Windungen herumgeführt sind, während die Anschlußleitungen 12 der Zellen 3' der ersten Gruppe und die Anschlußleitungen 11 der Zellen 3" der zweiten Gruppe den Kern 13 entfernt passieren.

Fig. 5 zeigt eine weitere alternative Ausführungsform mit einem stabförmigen Kern 13, um welchen nun alle Anschlußleitungen 11, 12 aller Zellen 3', 3" jeweils in Form einer halben Windung herumgeführt sind, und zwar jeweils in dem gezeigten Richtungs- und Windungssinn, um die gewünschte entgegengesetzte Kopplung zwischen den Zellen 3' der ersten Gruppe und den Zellen 3" der zweiten Gruppe zu erreichen.

Fig. 6 zeigt noch eine weitere Ausführungsform mit einem O-Kern 13 wie in den Fig. 1 und 3, um dessen Längsschenkel 14, 15 jeweils alle Anschlußleitungen 11, 12 aller Zellen 3', 3" in Form einer oder mehrerer Windungen herumgeführt sind, wobei wieder der Richtungs- und Windungssinn so gewählt ist, daß die entsprechenden induktiven Kopplungsrichtungen gemäß Fig. 2 erreicht werden.

Die Ausführungsformen der Fig. 3 und 5 haben den Vorteil, daß sie keine Überkreuzungen von Anschlußleitungen erfordern, was sich für einen flachen, einstückigen Schichtaufbau wie dem in Fig. 1 gezeigten besonders eignet.

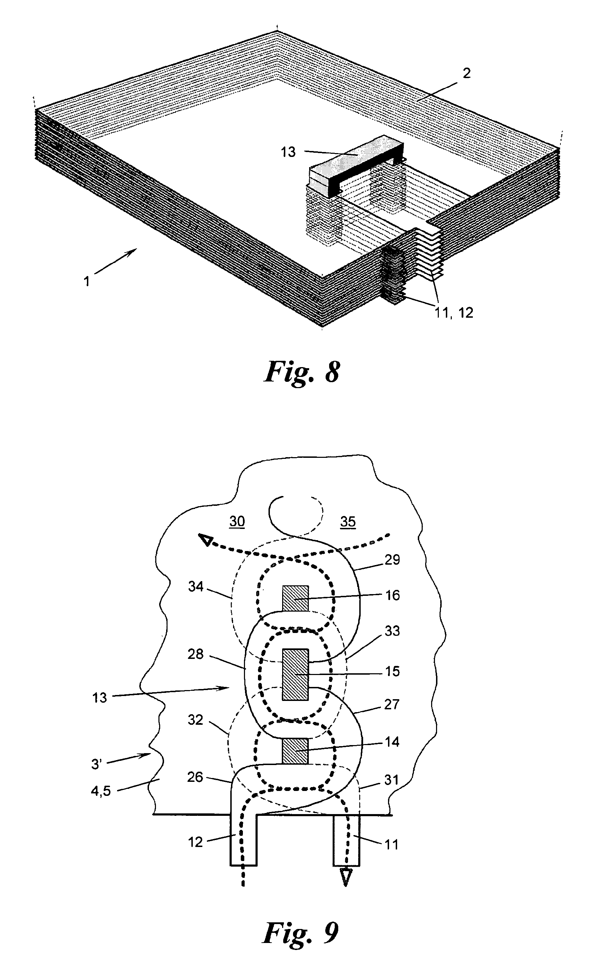

Die Fig. 7 und 8 zeigen eine weitere, besonders kompakte Ausführungsform mit hoher Kopplung und ohne Leitungsüberkreuzungen. Bei dieser Ausführungsform durchsetzt der O-Kern 13 mit seinen Längsschenkeln 14, 15 den gesamten Stapel 2 von Zellen 3', 3", und die Anschlußleitungen 11, 12 sind gleichsam in die Elektroden 4, 5 "integriert", und zwar in der folgenden Art und Weise.

Jene Anschlußleitungen 11 der positiven Elektroden 4 der Zellen 3' der ersten Gruppe, welche hier den O-Kern 13 durchsetzen, sind durch zwei Schlitze 21, 22 von der übrigen Fläche der jeweiligen Elektrode 4 bzw. 5 abgegrenzt. Die Schlitze 21, 22 gehen jeweils vom Durchtrittsort der Längsschenkel 14, 15 des Kerns 13 bis zum Rand der Elektroden 4, 5, sodaß der zwischen den Schlitzen 21, 22 verbleibende Teil der Elektroden gleichzeitig ihre jeweilige Anschlußleitung 11, 12 bildet, die den Kern 13 durchsetzt, wie durch die Stromlinien 23 angedeutet.

Die jeweils anderen Elektroden 5 der Zellen 3' der ersten Gruppe bzw. Elektroden 4 der Zellen 3" der zweiten Gruppe weisen zwischen den Durchtrittsorten der Längsschenkel 14, 15 des Kerns 13 einen Trennschlitz 24 auf, der verhindert, daß Ströme hier den Kern 13 durchsetzen, und diese vielmehr zwingt, außen am Kern 13 (wie in Fig. 3 gezeigt) vorbeizutreten, siehe die angedeuteten Stromlinien 25.

Werden die Anschlußleitungen 11, 12 der Ausführungsform von Fig. 7 wie in Fig. 2 gezeigt mit Schaltern 18 beschaltet, ergibt sich dadurch eine jeweils umgekehrte induktive Kopplung zwischen den Zellen 3' der ersten Gruppe und jenen 3" der zweiten Gruppe.

Wie aus den Fig. 7 und 8 ersichtlich, eignet sich diese Ausführungsform besonders für eine Vereinigung der jeweils aneinandergrenzenden Elektroden 4, 5 zweier benachbarter Zellen 3', 3", da diese aneinandergrenzenden Elektroden genau dieselbe Konfiguration besitzen. Sie können daher unmittelbar zu einer gemeinsamen, sogar einstückigen "bipolaren" Elektrode vereinigt werden.

Fig. 9 zeigt noch eine weitere Ausführungsform, bei welcher anstelle eines O-Kernes mit zwei Längsschenkeln 14, 15 ein E-Kern mit drei Längsschenkeln 14, 15, 16 Verwendung findet, die über einen als Joch dienenden Querschenkel 17 gemäß Fig. 1 zum "E" verbunden sind. Falls gewünscht, kann auch ein zweiter, gegenüberliegender Querschenkel 17 verwendet werden, um das "E" zu zwei aneinandergrenzenden "O" zu ergänzen. Es versteht sich, daß das Konzept von Fig. 9 auch auf mehr als drei Längsschenkel 14 - 16, z.B. vier, fünf oder mehr Längsschenkel, erweiterbar ist.

In Fig. 9 sind nur die beiden Elektroden 4, 5 der ersten Zelle 3' der ersten Gruppe gezeigt (jene der Zellen 3" der zweiten Gruppe sind spiegelbildlich). Die eine Anschlußleitung 12 der (hier obenliegend gezeigten) negativen Elektrode 5 windet sich, durch Schlitze 26 - 29 von ihrer Elektrode 5 abgegrenzt, mäanderförmig zwischen den Längsschenkeln 14 - 16 des Kernes 13 hindurch, bis sie bei 30 in die restliche Elektrodenfläche ausmündet. Die Anschlußleitung 11 der (hier untenliegend gezeigten) positiven Elektrode 4 windet sich, durch Schlitze 31 bis 34 von ihrer Elektrode 4 abgegrenzt, entgegengesetzt mäanderförmig zwischen den Längsschenkeln 14 - 16 hindurch, bis sie bei 35 in die restliche Elektrodenfläche übergeht.

In einer weiteren (nicht gezeigten) Ausführungsform könnte als Kombination der Ausführungsformen der Fig. 7 und 9 jeweils eine der Elektroden 4, 5 der Zellen 3', 3" anstelle einer mäanderförmig geführten Anschlußleitung einfach Schlitze 24 wie in der Ausführungsform von Fig. 7 aufweisen, was allerdings zu einer geringeren Kopplung führt.

Die Zellen 3', 3" können an ihren Anschlußleitungen 11, 12 selbstverständlich auch anders als in Fig. 2 gezeigt beschaltet werden, und zwar auf jede in der Technik bekannte Art und Weise, um einen induktiven Ladungsausgleich zwischen den Zellen zu erzielen. Darüber hinaus können die Anschlußleitungen 11, 12 auch dazu verwendet werden, die Zellspannung der einzelnen Zellen zu messen, oder die Zellen 3', 3" individuell zu laden oder zu entladen. Auch können die Schalter 18 nicht nur gruppenweise und mit in konstantem Takt umgeschaltet werden, sondern auch zell-individuell und je nach Bedarf getaktet, beispielsweise auf Grundlage zell-individueller Ladungsmessungen an den Anschlüssen 11, 12, um auch zell-individuelle Umladevorgänge zwischen ausgewählten Zellen 3', 3" vornehmen zu können.

Die Erfindung ist demgemäß nicht auf die dargestellten Ausführungsformen beschränkt, sondern umfaßt auch alle Kombinationen, Varianten und Modifikationen, die in den Rahmen der angeschlossenen Ansprüche fallen.

## Patentansprüche

1. Akkumulator (1), mit zumindest zwei in einem Stapel (2) übereinanderliegenden, seriellgeschalteten Zellen (3', 3") mit flächigen Elektroden (4, 5), wobei die Enden des Stapels (2) die Pole (9, 10) des Akkumulators (1) bilden und die Elektroden (4, 5) seitlich aus dem Stapel (2) austretende Anschlußleitungen (11, 12) aufweisen, **dadurch gekennzeichnet, daß** zumindest die einen Anschlußleitungen (11, 12) aller Zellen (3', 3") über einen sich etwa in Stapellängsrichtung erstreckenden gemeinsamen Kern (13) induktiv gekoppelt sind, wobei die Anschlußleitungen (11, 12) einer ersten Gruppe von Zellen (3') induktiv entgegengesetzt zu den Anschlußleitungen (11, 12) einer zweiten Gruppe von Zellen (3") gekoppelt sind.

2. Akkumulator nach Anspruch 1, **dadurch gekennzeichnet, daß** jede der genannten Anschlußleitungen (11, 12) sich in der Ebene (7) ihrer flächigen Elektrode (4, 5) am Kern (13) vorbeiwindet.

3. Akkumulator nach Anspruch 1 oder 2, **dadurch gekennzeichnet, daß** jede Elektrode (4, 5) mit ihrer Anschlußleitung (11, 12) einstückig gefertigt ist.

4. Akkumulator nach einem der Ansprüche 1 bis 3, **dadurch gekennzeichnet, daß** die genannten einen Anschlußleitungen (11, 12) in der ersten Gruppe (3') von den positiven (4) und in der zweiten Gruppe (3") von den negativen Elektroden (5) der Zellen ausgehen, oder umgekehrt.

5. Akkumulator nach einem der Ansprüche 1 bis 4, **dadurch gekennzeichnet, daß** auch die jeweils anderen Anschlußleitungen (11, 12) aller Zellen (3', 3") in entsprechendem Kopplungssinne über den Kern (13) geführt sind.

6. Akkumulator nach einem der Ansprüche 1 bis 5, **dadurch gekennzeichnet, daß** der Kern (13) ein U- oder O-Kern ist, dessen Längsschenkel (14, 15) den Stapel (2) durchsetzen, wobei die genannten einen Anschlußleitungen (11, 12) der Zellen (3', 3"), durch Schlitze (21, 22) von ihrer Elektrode (4, 5) abgegrenzt, zwischen den Längsschenkeln (14, 15) hindurchtreten, wogegen die jeweils anderen Elektroden (4, 5) der Zellen (3', 3") einen Trennschlitz (24) zwischen den Längsschenkeln (14, 15) aufweisen.

7. Akkumulator nach einem der Ansprüche 1 bis 5, **dadurch gekennzeichnet, daß** der Kern (13) zumindest zwei über mindestens einen Querschenkel (17) verbundene Längsschenkel (14-16) aufweist, die den Stapel (2) durchsetzen, wobei die genannten einen Anschlußleitungen (11, 12) der Zellen (3', 3"), durch Schlitze (26-29) von ihrer Elektrode (4, 5) abgegrenzt, mäanderförmig zwischen den Längsschenkeln (14-16) hindurchtreten.

8. Akkumulator nach Anspruch 7, **dadurch gekennzeichnet, daß** die jeweils anderen Anschlußleitungen (11, 12) der Zellen (3', 3"), durch Schlitze (31-34) von ihrer Elektrode (4, 5) abgegrenzt, entgegengesetzt mäanderförmig zwischen den Längsschenkeln (14-16) hindurchtreten.

9. Akkumulator nach Anspruch 7, **dadurch gekennzeichnet, daß** die jeweils anderen Elektroden (4, 5) der Zellen (3', 3") einen Trennschlitz (24) zwischen den Längsschenkeln (14-16) aufweisen.

10. Akkumulator nach einem der Ansprüche 1 bis 9, **dadurch gekennzeichnet, daß** die Zellen der ersten (3') und der zweiten Gruppe (3") einander abwechseln.

11. Akkumulator nach einem der Ansprüche 1 bis 10, **dadurch gekennzeichnet, daß** die aneinander angrenzenden Elektroden (4, 5) zweier benachbarter Zellen (3', 3") zu einer gemeinsamen bipolaren Elektrode vereinigt sind.

12. Akkumulator nach einem der Ansprüche 1 bis 11, **dadurch gekennzeichnet, daß** die Anschlußleitungen (11, 12) der aneinander angrenzenden Elektroden (4, 5) zweier benachbarter Zellen (3', 3") zu einer gemeinsamen bipolaren Anschlußleitung vereinigt sind.

13. Akkumulator nach einem der Ansprüche 1 bis 12, **dadurch gekennzeichnet, daß** die Anschlußleitungen (11, 12) jeder Zelle (3', 3") über einen gesteuerten Schalter (18) verbunden sind, wobei zumindest ein Schalter (18) der ersten (3') und zumindest ein Schalter (18) der zweiten Gruppe (3") von Zellen abwechselnd angesteuert sind.

14. Akkumulator nach einem der Ansprüche 1 bis 13, **dadurch gekennzeichnet, daß** der Kern (13) mit einer Hilfswicklung (20) zur Auskopplung von Sekundärleistung und/oder zum Laden des Akkumulators versehen ist.

15. Akkumulator nach einem der Ansprüche 1 bis 14, **dadurch gekennzeichnet, daß** der Akkumulator (1) ein Lithium-Ionen- oder Lithium-Polymer-Akkumulator ist.
